# EUROPÄISCHE PATENTSCHRIFT

(11) **EP 2 647 079 B1**
(45) Veröffentlichungstag und Bekanntmachung des Hinweises auf die Patenterteilung: **07.11.2018**
(21) Anmeldenummer: 11788777.8
(22) Anmeldetag: 25.11.2011
(51) Int. Cl.: H01M 2/26, H01M 4/02, H01M 4/04, H01M 4/70, H01M 10/04, H01M 10/0585, H01M 10/052

(54) **BATTERIEELEKTRODE UND VERFAHREN ZUM HERSTELLEN DERSELBEN**
BATTERY ELECTRODE AND METHOD FOR PRODUCING SAME
ÉLECTRODE DE BATTERIE ET PROCÉDÉ DE FABRICATION CORRESPONDANT

(30) Priorität: 29.11.2010 DE 102010062140
(43) Veröffentlichungstag der Anmeldung: 09.10.2013
(73) Patentinhaber: Zentrum für Sonnenenergie- und Wasserstoff-Forschung Baden-Württemberg, 70565 Stuttgart (DE)
(72) Erfinder: STERN, Rainer, 89073 Ulm (DE); KASPER, Michael, 89257 Illertissen (DE)
(74) Vertreter: Ter Meer Steinmeister & Partner
(86) Internationale Anmeldenummer: PCT/EP2011/005945
(87) Internationale Veröffentlichungsnummer: WO 2012/072221

(56) Entgegenhaltungen:
- EP-A1- 0 766 327
- EP-A1- 1 359 633
- EP-A1- 1 596 459
- WO-A1-2008/011061
- WO-A1-2009/055529
- WO-A1-2010/105917
- DE-A1-102008 041 713
- DE-C1- 10 224 452
- JP-A- 2000 149 911
- JP-A- 2003 187 763

## Beschreibung

### Technisches Gebiet

Die Erfindung betrifft eine Batterieelektrode und ein Verfahren zum Herstellen derselben.

### Hintergrund der Erfindung

Im Allgemeinen bezeichnet eine Batterie sowohl nicht-wiederaufladbare Primärzellen als auch wiederaufladbare Sekundärzellen (auch Akku genannt). Batterien werden anhand der zugrundeliegenden chemischen Redoxreaktion, der eingesetzten Materialien, der elektrischen Werte (z.B. Spannung oder Kapazität) oder der geometrischen oder konstruktiven Bauform eingeteilt. Beispielsweise gibt es Alkali-Mangan-Batterien, Zink-Kohle-Batterien oder Lithiumbatterien. Entsprechend ihrem inneren Aufbau werden bei Batterien des Weiteren Wickelzellen und Stapelbatterien unterschieden. Bei einer Wickelzelle werden die übereinander angeordneten Elektroden- und Separatorschichten spiralförmig aufgewickelt und beispielsweise in eine Rundbatterie mit zylindrischem Gehäuse eingebaut. Bei einer Stapelbatterie hingegen werden mehrere Elektroden- und Separatorschichten abwechselnd übereinander gestapelt.

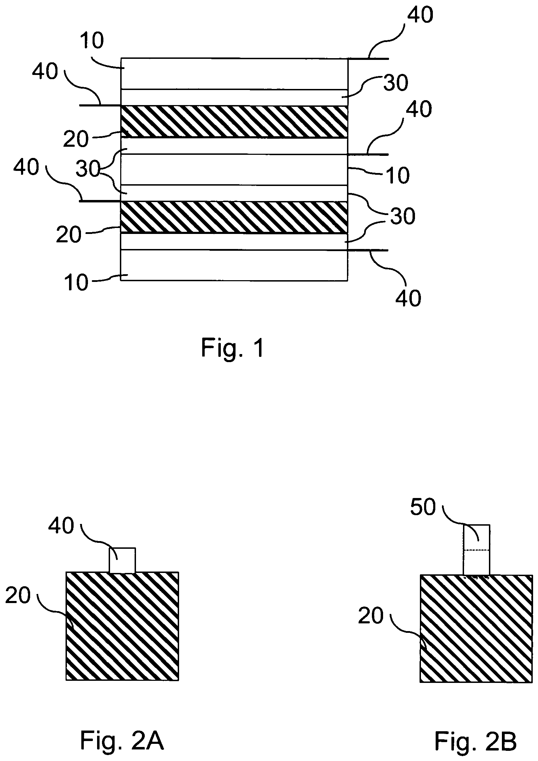

In Fig. 1 ist beispielhaft eine Stapelbatterie gezeigt. Wie in Fig. 1 gezeigt, ist in der Batterie abwechselnd eine Anode 10 und eine Kathode 20 angeordnet, wobei jeweils zwischen der Anode 10 und der Kathode 20 ein Separator 30 angeordnet ist, um die beiden Elektroden räumlich und elektrisch zu trennen. Der Separator 30 muss jedoch für Ionen durchlässig sein, die die Umwandlung der gespeicherten chemischen Energie in elektrische Energie bewirken. Meistens werden für Separatoren 30 mikroporöse Kunststoffe oder Vliese aus Glasfaser oder Polyethylen verwendet. Die Anoden 10 sind in ihren Ableiterbereichen 40 miteinander verbunden ebenso wie die Kathoden 20, sodass alle gleichnamigen Elektroden in einer Batterie zusammengeschaltet sind. In den Ableiterbereichen 40 ist jeweils eine Anschlussfahne 50 (siehe Fig. 2B) für die Kathoden 20 und die Anoden 10 befestigt, die mit einem entsprechenden äußeren Spannungspol der Batterie verbunden wird.

Fig. 2A zeigt eine Draufsicht auf eine Kathode 20 mit einem Ableiterbereich 40. In den Ableiterbereichen 40 der übereinander angeordneten Kathoden 20 werden die Kathoden 20 miteinander verbunden. Wie in Fig. 2B gezeigt, wird die Anschlussfahne 50 an den miteinander verbundenen Ableiterbereichen 40 befestigt, die nach dem Zusammensetzen der Batterie mit dem Minus-Pol der Batterie in Kontakt steht.

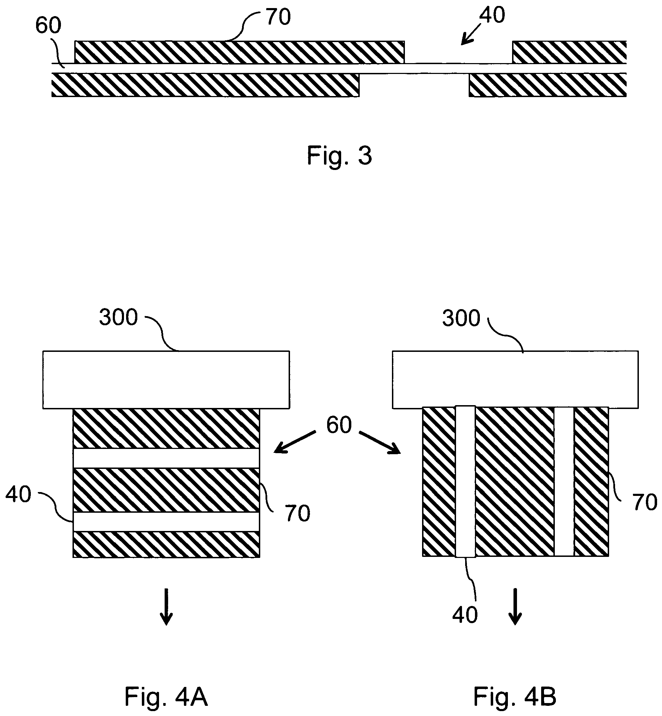

Üblicherweise werden Batterieelektroden als Bulk- oder Rollenmaterial vorgefertigt, aus dem bei der Herstellung einer Batterie eine gewünschte Elektrodenform ausgeschnitten wird. Wie in Fig. 3 gezeigt, umfasst das Elektrodenmaterial ein Kollektorsubstrat 60, das mit einem Beschichtungsfilm 70 versehen ist. Dabei weist das Elektrodenmaterial ein oder mehrere unbeschichtete Ableiterbereiche 40 auf, die später im zusammengesetzten Zustand erforderlich sind, um Spannung bzw. Strom nach Außen abzuführen. An den Ableiterbereichen 40 werden mehrere gleichnamige Elektroden miteinander verbunden und eine metallische Anschlussfahne 50 befestigt. Wenn das Kollektorsubstrat 60 beidseitig beschichtet ist, sind deshalb auch auf beiden Seiten Ableiterbereiche 40 ausgebildet. Hierbei müssen die Ableiterbereiche nicht unbedingt gegenüberliegend ausgebildet sein, sondern können gegeneinander versetzt sein, wie in Fig. 3 gezeigt.

In Figuren 4A und 4B sind Verfahren zum Herstellen eines Elektrodenmaterials mittels eines Schlitzdüsensystems 300 gezeigt. Auf dem bandförmigen Kollektorsubstrat 60 wird ein tintenartiger Beschichtungsfilm 70 aufgetragen und ein unbeschichteter Ableiterbereich 40 ausgebildet. Dies kann entweder durch diskontinuierliche, intermittierende Beschichtung, wobei wie in Fig. 4A gezeigt durch regelmäßiges oder gelegentliches Unterbrechen der Beschichtung ein unbeschichteter Ableiterbereich 40 ausgebildet wird, oder durch kontinuierliche Beschichtung, wie in Fig. 4B gezeigt, erfolgen. Allerdings ist das Ausbilden von komplexeren Ableiterbereichen mit diesen Verfahren sehr aufwändig. Deshalb werden gelegentlich Maskierungsschritte eingesetzt. Alternativ können Ableiterbereiche 40 durch Bürsten oder ähnliche Verfahren auf einem Kollektorsubstrat 60 freigelegt werden.

Nach der Beschichtung wird das Elektrodenmaterial kalandriert, um den Beschichtungsfilm zu verdichten und Hohlräume zu beseitigen, die beim Trocknen des Beschichtungsfilms 70 entstehen. Das fertige Elektrodenmaterial kann dann aufgerollt und bis zur Weiterverarbeitung gelagert werden. Für das Herstellen einer Batterie wird aus dem Elektrodenmaterial eine gewünschte Form ausgeschnitten oder ausgestanzt, die je nach Batterietyp oder Batterieform unterschiedlich ist. Beim Ausschneiden der Batterieelektrode ist zudem zu beachten, dass ein Ableiterbereich 40 vorhanden sein muss. Ein Beispiel für eine rechteckige Elektrodenform mit Ableiterbereich 40 ist in Fig. 2A gezeigt.

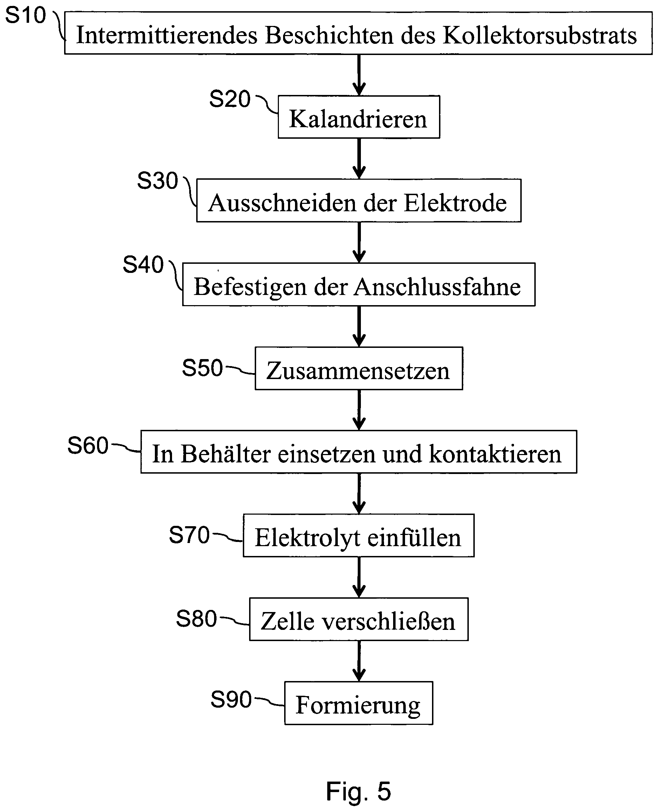

In Fig. 5 ist ein Ablaufdiagramm gezeigt, anhand dessen der Herstellungsprozess einer Batterie, beispielsweise einer Wickelzelle oder einer Stapelbatterie, veranschaulicht wird. Zuerst wird das Kollektorsubstrat 60 mit dem Beschichtungsfilm 70 beispielsweise in einem intermittierenden Verfahren beschichtet (S10), wobei durch Unterbrechung oder Aussetzen beim Auftragen der tintenartigen Beschichtung mehrere unbeschichtete Ableiterbereiche 40 ausgebildet werden. Anschließend wird das Elektrodenmaterial kalandriert (S20). Aus dem Elektrodenmaterial kann dann eine gewünschte Elektrodenform ausgeschnitten oder ausgestanzt werden (S30), wobei die ausgestanzte Form einen Ableiterbereich 40 aufweisen muss. Diese Schritte erfolgen sowohl zum Herstellen der Anode 10 als auch zum Herstellen der Kathode 20. Als nächstes werden die ausgeschnittenen Elektroden so übereinander angeordnet (S40), dass abwechselnd eine Anode 10 und eine Kathode 20 mit einem Separator 30 dazwischen aufeinanderfolgen (siehe Fig. 1). Hierbei werden die Ableiterbereiche 40 der Kathoden 20 und die Ableiterbereiche 40 der Anoden 10 jeweils übereinander angeordnet und miteinander verbunden. Anschließend wird eine Anschlussfahne 50 daran befestigt (S50). Die Anzahl der übereinander angeordneten Anoden 10 und Kathoden 20 kann dabei je nach Art und Eigenschaft der Batterie variieren. Nach Fertigstellen der Elektrodenanordnung wird die Elektrodenanordnung in ein Gehäuse eingesetzt und die Anschlussfahnen 50 werden mit den äußeren Spannungspolen des Gehäuses verbunden (S60). Bei einer Wickelzelle wird die Elektrodenanordnung spiralförmig aufgewickelt und so in das Gehäuse eingesetzt. Nach Einfüllen des Elektrolyts (S70) wird die Zelle dann verschlossen (S80) und abschließend formiert (S90).

Bei den herkömmlichen Verfahren zum Herstellen von Batterieelektroden bestehen allerdings folgende Probleme. So ist das Herstellen von unbeschichteten Ableiterbereichen durch Maskierungsschritte oder Abbürsten der Beschichtung sehr aufwändig und teuer. Bei dem alternativen Herstellungsverfahren durch intermittierende oder kontinuierliche Beschichtung mit Hilfe eines Schlitzdüsensystems hingegen sind die möglichen Formen und Anordnungen der Ableiterbereiche auf dem Elektrodenmaterial stark eingeschränkt. Angesichts der vielfältigen Einsatzgebiete von Batterien insbesondere in Design-Produkten wie beispielsweise in Mobiltelefonen, Laptops oder Autos wird allerdings eine Flexibilität bei der Gestaltung der Batterieelektroden immer stärker gefordert. Hierbei stellt der Trend zu kleineren Geräten eine besondere Herausforderung an die Batterieherstellung dar. Zum einen müssen daher Batterien mit kleineren Abmessungen entwickelt werden, zum anderen sind häufig komplexe Formen gefordert, um den Innenraum eines Geräts möglichst effizient zu nutzen. Darüber hinaus ist es bei einem intermittierenden Beschichtungsverfahren schwierig, regelmäßige und saubere Randbereiche zwischen Beschichtungsbereich und Ableiterbereich herzustellen.

Darüber hinaus ist es mit den herkömmlichen Verfahren schwierig und teuer, eine Formenvielfalt der Elektroden zu realisieren. Aus Kostengründen wird üblicherweise ein Rollenmaterial als Elektrodenmaterial verwendet, bei dem mögliche Positionen des unbeschichteten Ableiterbereichs 40 bezüglich des Beschichtungsfilms 70 fest definiert sind. Dadurch ist allerdings die Designfreiheit für die Elektrodenform stark eingeschränkt, weil jede Elektrode einen Ableiterbereich 40 aufweisen muss. Außerdem entsteht beim Ausschneiden der gewünschten Elektrodenform mitsamt des Ableiterbereichs 40 viel überschüssiges Elektrodenmaterial, das verworfen werden muss. Wenn beispielsweise kleine Elektroden so ausgeschnitten werden, dass sie einen Ableiterbereich 40 enthalten, können bei einem großen Abstand zwischen aufeinanderfolgenden Ableiterbereichen 40 Bereiche des dazwischen liegenden beschichteten Substrats nicht mehr verwendet werden. Dadurch wird der Materialverbrauch erhöht und das Herstellungsverfahren verteuert. Des Weiteren muss für jede gewünschte Elektrodenform eine eigene Stanzform zum Ausstanzen der gewünschten Form angeschafft werden. Aufgrund der hohen Anforderungen an eine Schneidgüte sind diese Stanzformen jedoch sehr teuer.

In den herkömmlichen Herstellungsverfahren wird der Ableiterbereich 40 von einem beschichteten Elektrodenbereich vorstehend ausgebildet, um daran die Anschlussfahne 50 zu befestigen und gleichnamige Elektroden miteinander zu verbinden. Dies führt jedoch zu ungenutztem Raum in der Batterie, der nicht durch aktives Elektrodenmaterial gefüllt ist. Dadurch wird die Größe der Batterie unnötig erhöht bzw. eine äußere Form der Batterie festgelegt.

Des Weiteren können die Ableiterbereiche 40 in den herkömmlichen Herstellungsverfahren oder auch während des Lagerns leicht verunreinigt werden. Insbesondere bei einem Kalandrierprozess können Verunreinigungen auf die Ableiterbereiche 40 gelangen. Dies verschlechtert die Qualität eines elektrischen Kontakts zwischen gleichnamigen Elektroden untereinander und zwischen den Elektroden und einer dazugehörigen Anschlussfahne 50. Da beim Herstellen des Elektrodenmaterials zudem die Ableiterbereiche 40 vor dem Kalandrierprozess ausgebildet werden, ist das Kalandrieren aufgrund der ungleichmäßig dicken Struktur erschwert. Außerdem kann der durch herkömmliche Verfahren ausgebildete Ableiterbereich 40 schlecht definiert sein, wobei besonders ein Randbereich des Ableiterbereichs 40 ungenau und ungleichmäßig ausgebildet sein kann.

WO 2009/055529 beschreibt ein Verfahren zur Herstellung einer Dünnschichtbatterie, TFB, bei der mit CVD bzw. PVD gearbeitet wird. Auf einem nichtleitfähigen Substrat wird eine Kathodenstromschicht abgeschieden. Auf der Kathodenstromschicht wird eine Kathodenschicht aufgebracht. Auf der Kathodenschicht wird eine Elektrolytschicht aufgebracht. Darauf wird eine Anodenschicht aufgebracht. Zum Ausschneiden der Batterie wird ein maskenloser Laserschneideprozess verwendet. Der Schichtaufbau kann zum Schutz der Ränder mit einem dielektrischen und/oder metallischen Material bspw. mittels Aufdrucken oder mittels eines Vakuumabscheideverfahrens beschichtet werden. Wenn ein Vakuumabscheideverfahren angewendet wurde - werden die Kontakte durch Laserablation freigelegt.

EP 1 596 459 beschreibt ein elektrochemisches Gerät und ein Verfahren zur Herstellung. Ein Kunststoffsubstrat wird beidseitig mit einem Metall beschichtet, welches dann entfernt wird.

JP 2000149911 beschreibt ein Verfahren zur Herstellung einer Batterieelektrode, bei dem ein Aktivmaterial mittels eines Lasers auf einer abstehenden Ableiterfahne abgetragen wird.

### Zusammenfassung der Erfindung

Es ist daher Aufgabe der vorliegenden Erfindung, eine Batterieelektrode und ein Herstellungsverfahren für selbige anzugeben, wobei größtmögliche Designfreiheit bei der Gestaltung eines Ableiterbereichs und einer Batterieelektrode bei geringen Herstellungskosten ermöglicht wird.

Die Aufgabe wird durch die Merkmale der unabhängigen Ansprüche gelöst.

Die Erfindung basiert auf dem Gedanken, einen auf einem Kollektorsubstrat ausgebildeten Beschichtungsfilm in einem Ableiterbereich durch Laserablation zu entfernen. Auf diese Weise kann der Beschichtungsfilm großflächig und kontinuierlich auf dem Kollektorsubstrat hergestellt werden, ohne einen Ableiterbereich aussparen zu müssen. Wegen der gleichmäßigen Dicke des flächig beschichteten Kollektorsubstrats ist darüber hinaus ein Kalandrierprozess vereinfacht und kann mit besserer Qualität durchgeführt werden. Außerdem kann jede beliebige Elektrodenform aus dem beschichteten Kollektorsubstrat geschnitten werden, ohne durch eine vorgegebene Lage des Ableiterbereichs eingeschränkt zu sein. Folglich kann das Elektrodenmaterial effizienter genützt werden, sodass weniger Abfallmaterial entsteht. Durch die Verwendung eines Lasers zum Freilegen der Ableiterbereiche können die Ableiterbereiche außerdem in beliebiger Form und an jeder beliebigen Stelle mit sauberen und regelmäßigen Kanten auf dem beschichteten Kollektorsubstrat hergestellt werden. Dadurch besteht absolute Designfreiheit und die Möglichkeit, flächenoptimierte Ableiterstrukturen herzustellen. Beispielsweise können inaktive Bereiche auf der Elektrode, d.h. die Flächen der Ableiterbereiche, reduziert werden. Somit kann auch in der Batterie ein inaktives Volumen verringert werden, z.B. indem unbeschichtete Ableiterbereiche in einen beschichteten Bereich der Elektrode hineinragen oder innerhalb des be
schichteten Bereichs ausgebildet werden. Alternativ kann ein Umfang des Ableiterbereichs mindestens zu einer Hälfte vom beschichteten Bereich umgegeben sein.

Für den Materialabtrag mittels Laserablation kann jedes geeignete Lasersystem verwendet werden, z.B. Schneid- oder Gravurlasersysteme. Aufgrund der hohen Kantenqualität und Schnittpräzision bezüglich Schnittführung und Eindringtiefe können Ableiterbereiche von hoher Qualität hergestellt werden. Durch die Verwendung von ultrakurzen Laserpulsen kann darüber hinaus der Energieeintrag reduziert werden, sodass eine thermische Belastung des Elektrodenmaterials gering gehalten wird. Da geeignete Lasersysteme vergleichbar teuer wie Schlitzdüsensysteme sind, entstehen keine hohen Anschaffungskosten.

Gemäß einem Aspekt der vorliegenden Erfindung wird ein Verfahren zum Herstellen einer Batterieelektrode angegeben. In diesem Verfahren wird zuerst ein Beschichtungsfilm auf einem Kollektorsubstrat aufgebracht. Anschließend wird in mindestens einem Ableiterbereich der Beschichtungsfilm mit einem Laser entfernt. Dies kann durch gepulste Laserstrahlung oder kontinuierliche Laserstrahlung erfolgen. Möglicherweise wird der Beschichtungsfilm auf beiden Seiten des Kollektorsubstrats ausgebildet, um eine aktive Oberfläche der Elektrode zu vergrößern. Dann kann auf beiden Seiten des Kollektorsubstrats jeweils mindestens ein Ableiterbereich ausgebildet werden. Außerdem kann der Beschichtungsfilm so ausgebildet werden, dass er mindestens eine der beiden Oberflächen des Kollektorsubstrats im Wesentlichen vollständig bedeckt, ohne freie Ränder oder freie Bereiche unbeschichtet zu lassen. Zum Beschichten wird vorzugsweise ein kontinuierliches Beschichtungsverfahren eingesetzt, wie beispielsweise Doctor-blade, Comma-bar oder Kiss-coating. Dadurch kann bei geringen Herstellungskosten eine größere Prozesssicherheit und somit eine bessere Qualität des Elektrodenmaterials gewährleistet werden.

In einem weiteren Ausführungsbeispiel wird nicht nur der Beschichtungsfilm in einem Ableiterbereich mit einem Laser entfernt, sondern auch eine dünne Schicht an der Oberfläche des Kollektorsubstrats, so dass eine frische saubere Oberfläche entsteht. Dadurch können Verunreinigungen und oxidierte Schichten im Ableiterbereich entfernt werden, wodurch ein Kontaktwiderstand zwischen den Elektroden und einer Anschlussfahne verringert wird. Vorzugsweise wird die Anschlussfahne unmittelbar nach dem Herstellen des Ableiterbereichs am Ableiterbereich befestigt, wobei das Herstellen des Ableiterbereichs entweder nur das Entfernen des Beschichtungsfilms oder das Entfernen des Beschichtungsfilms sowie einer Oberflächenschicht des Kollektorsubstrats umfassen kann. Daher kann durch das Verwenden eines Lasers zum Abtragen des Beschichtungsfilms und/oder einer Oberflächenschicht des Kollektorsubstrats das Auftreten von Verunreinigungen vermieden werden, die eine ernsthafte Gefahr für eine fertige Batterie darstellen und Dendritenbildung mit daraus resultierendem Kurzschluss verursachen können, wie beispielsweise beim Bürsten entstehende Schleifpartikel oder Beschichtungsreste.

In einer bevorzugten Ausführungsform des erfindungsgemäßen Verfahrens wird die Batterieelektrode entweder vor oder nach dem Herstellen des mindestens einen Ableiterbereichs in einer vorgegebenen Form mit Hilfe des Lasers ausgeschnitten. Auf diese Weise kann jede beliebige Elektrodenform gewählt werden, ohne dass spezielle Werkzeuge, wie etwa besondere Stanzformen, angeschafft werden müssen. Dadurch wird die Designfreiheit beim Herstellen der Batterieelektrode weiter vergrößert und der Arbeitsablauf optimiert. Durch das Ausbilden des Ableiterbereichs und das Ausschneiden der Batterieelektrode mittels Laser kann Arbeitszeit und zusätzliches Werkzeug eingespart werden, da ein Umsetzen des zu bearbeitenden Elektrodenmaterials oder des Werkzeugs entfällt. Somit kann der Ableiterbereich oder auch die Batterieelektrode in jeder belieben Form hergestellt werden, z. B. rund, halbkreisförmig, ringförmig, rechteckig oder dreieckig. Außerdem kann der Ableiterbereich beliebig auf der beschichteten Elektrodenfläche angeordnet werden. Vorzugsweise ragt der Ableiterbereich in die beschichtete Elektrodenfläche so hinein, dass er an einem größeren Teil seines Umfangs bzw. wenigstens zur Hälfte von der beschichteten Elektrodenfläche umgeben ist. Dabei kann er mit dem restlichen Teil seines Umfangs an einen äußeren Rand der Batterieelektrode angrenzen. Alternativ kann der Ableiterbereich vollständig innerhalb der beschichteten Elektrodenfläche angeordnet sein. Auf diese Weise kann beim Zusammensetzen der Batterie ein inaktiver Bereich oder Totvolumen reduziert werden, sodass bei gleicher Batteriegröße eine Kapazität bzw. eine volumetrische Energiedichte erhöht wird.

Des Weiteren kann mindestens eine Aussparung in der Batterieelektrode ausgebildet werden. Vorzugsweise entspricht die Aussparung einer Elektrode einem auf einer gegennamigen Elektrode ausgebildeten Ableiterbereich, damit die übereinander angeordneten Ableiterbereiche der gleichnamigen Elektroden bei einer alternierenden Elektrodenanordnung durch die anderen Elektroden hindurch miteinander verbunden werden können. Dies kann beispielsweise vorteilhaft sein, wenn der Ableiterbereich einer Elektrode in einen beschichteten Elektrodenbereich hineinragt oder von diesem vollständig umgeben ist. Wenn die Batterieelektrode mittels Laserschneiden ausgeschnitten wird, kann das Ausschneiden der Aussparung ebenfalls mit Hilfe des Lasers erfolgen, um einen Verfahrensablauf zu optimieren.

In einer weiteren bevorzugten Ausführungsform der vorliegenden Erfindung wird während der Laserablation des Beschichtungsfilms und/oder während der Laserablation der Oberflächenschicht des Kollektorsubstrats und/oder während des Laserschneidens ein Prozessgas auf das Substrat geblasen. Dadurch können durch die Laserbearbeitung entstandene Rückstände schon während des Vorgangs entfernt werden. Außerdem kann ein Prozessgas verwendet werden, das eine Oxidation oder andere unerwünschte chemische Oberflächenreaktionen unterdrückt. Vorzugsweise ist das Prozessgas kalt, um das Elektrodenmaterial während der Laserbearbeitung zu kühlen.

In einem weiteren Aspekt der vorliegenden Erfindung wird eine Batterieelektrode angegeben, die ein Kollektorsubstrat, einen auf dem Kollektorsubstrat ausgebildeten Beschichtungsfilm und einen Ableiterbereich enthält, wobei der Ableiterbereich durch Entfernen des Beschichtungsfilms unter Verwendung eines Lasers ausgebildet ist. Somit wird der Ableiterbereich durch einen unbeschichteten Bereich des Kollektorsubstrats gebildet. Die Batterieelektrode kann gemäß irgendeinem oben beschriebenen Ausführungsbeispiel des erfindungsgemäßen Verfahrens hergestellt werden.

Als weiterer Aspekt der vorliegenden Erfindung wird eine Batterie angegeben, die eine nach irgendeinem der oben beschriebenen Ausführungsbeispiele des erfindungsgemäßen Verfahrens hergestellte Batterieelektrode enthält.

### Kurze Beschreibung der Figuren

In den Figuren zeigen:
Fig. 1 eine schematische Schnittansicht einer Elektrodenanordnung in einer herkömmlichen Batterie;
Figuren 2A und 2B eine Draufsicht auf eine herkömmliche Batterieelektrode;
Fig. 3 eine Schnittansicht eines herkömmlichen Elektrodenmaterials;
Figuren 4A und 4B Verfahren zum Herstellen eines herkömmlichen Elektrodenmaterials;
Fig. 5 ein Ablaufdiagramm eines herkömmlichen Herstellungsverfahrens einer Batterie;
Fig. 6 Batterieelektroden gemäß einem ersten Ausführungsbeispiel der vorliegenden Erfindung;
Fig. 7 Batterieelektroden gemäß einem weiteren Ausführungsbeispiel der vorliegenden Erfindung;
Fig. 8 Batterieelektroden gemäß einem anderen Ausführungsbeispiel der vorliegenden Erfindung;
Fig. 9A-9C Schnittansichten durch ein Elektrodenmaterial während eines Herstellungsprozesses gemäß der vorliegenden Erfindung; und
Fig. 10 ein Ablaufdiagramm eines Herstellungsverfahrens gemäß einem Ausführungsbeispiel der vorliegenden Erfindung.

### Ausführliche Beschreibung der Erfindung

Im Folgenden wird die Erfindung anhand des Beispiels der Lithium-Ionen-Batterie beschrieben, die sich durch eine hohe Energiedichte und thermische Stabilität auszeichnet. Die vorliegende Erfindung soll jedoch nicht auf Lithium-Ionen-Batterien beschränkt sein, sondern kann auf jede beliebige Batterie angewendet werden.

Bei einer Lithium-Ionen-Batterie besteht ein Kollektorsubstrat 60 einer Anode 10 beispielsweise aus Kupfer, das mit einem Beschichtungsfilm 70 aus Graphit, Bindemittel, Ruß und Lösungsmittel beschichtet ist. Gemäß der vorliegenden Erfindung wird der Beschichtungsfilm 70 in einem Ableiterbereich 40 entfernt, sodass das Kollektorsubstrat 60 im Ableiterbereich 40 freigelegt ist. Am Ableiterbereich 40 der Anode 10 kann eine Anschlussfahne 50 aus Nickel befestigt werden. Bei der Kathode 20 besteht ein Kollektorsubstrat 60 beispielsweise aus Aluminium und ist mit einem Beschichtungsfilm 70 aus einem zu einer Redoxreaktion beitragenden Aktivmaterial, Bindemittel, Ruß, Graphit und Lösungsmittel beschichtet. Die Anschlussfahne der Kathode besteht vorzugsweise ebenfalls aus Aluminium.

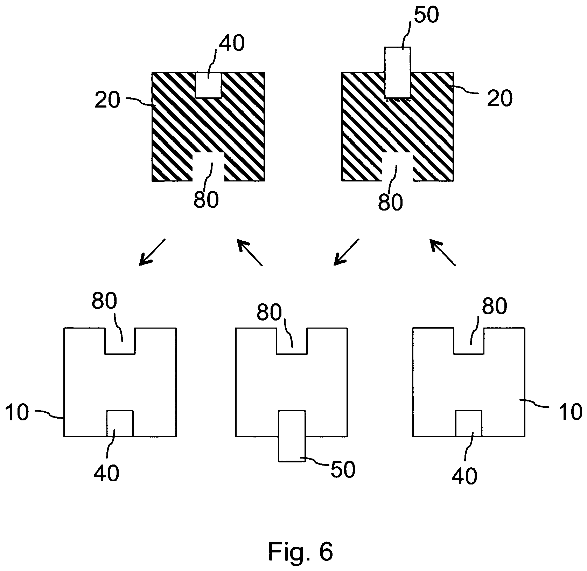

In Fig. 6 sind Batterieelektroden gemäß der vorliegenden Erfindung gezeigt, bei denen ein Ableiterbereich 40 an seinem Umfang überwiegend an den Beschichtungsfilm 70 auf dem Kollektorsubstrat 60 angrenzt. Sowohl die Anoden 10 als auch die Kathoden weisen einen innen liegenden Ableiterbereich 40 und eine Aussparung 80 auf. Die Aussparung 80 ist an einer Stelle ausgebildet, die dem Ableiterbereich 40 der jeweiligen gegennamigen Elektrode im zusammengesetzten Zustand entspricht. Die Aussparungen 80 der Anoden 10 sind folglich so angeordnet, dass sie im zusammengesetzten Zustand der Elektroden über bzw. unter den Ableiterbereichen 40 der Kathoden 10 liegen. Die Pfeile in Fig. 6 deuten eine Elektrodenanordnung im zusammengesetzten Zustand an, wobei jeweils abwechselnd eine Anode 10 und eine Kathode 20 übereinander angeordnet werden. Hierbei ist zwischen den Anoden 10 und Kathoden 20 ein Separator 30 angeordnet (nicht gezeigt), der aus mikroporösen Folien oder Vliesstoffen bestehen kann. In den Ableiterbereichen 40 können vor dem Zusammensetzen der Elektroden Anschlussfahnen 50 jeweils an mindestens einer der Anoden 10 und an mindestens einer der Kathoden 20 befestigt werden. Vorzugsweise werden die Anschlussfahnen 50 jedoch nach dem Zusammensetzen der Elektroden beispielsweise durch Ultraschallschweißen an den Ableiterbereichen 40 befestigt. Da bei diesem Ausführungsbeispiel ein Ableiterbereich 40 einer Elektrode einer Aussparung 80 einer gegennamigen Elektrode gegenüberliegt, können hierbei gleichzeitig jeweils die Anoden 10 bzw. die Kathoden 20 an ihren Ableiterbereichen 40 elektrisch miteinander verbunden werden.

Es ist auch möglich, nur die Kathoden oder nur die Anoden mit einem innen liegenden oder hineinragenden Ableiterbereich auszubilden, wobei die andere der zwei Elektroden nach dem herkömmlichen Verfahren mit vorstehendem Ableiterbereich hergestellt wird.

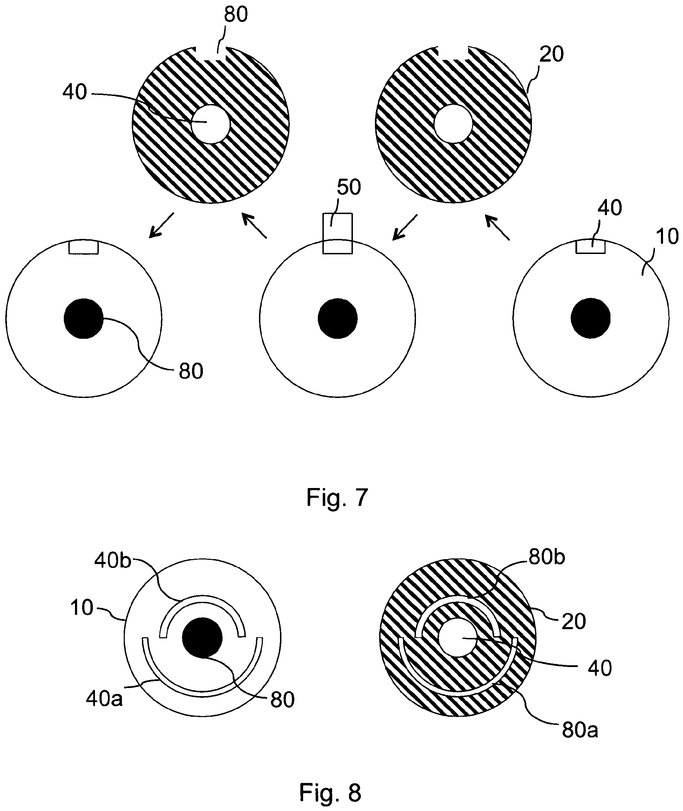

In Fig. 7 ist ein weiteres Ausführungsbeispiel für Batterieelektroden gemäß der vorliegenden Erfindung gezeigt. Die in Fig. 7 dargestellten Anoden 10 weisen eine runde Aussparung 80 in ihrer Mitte auf, während die Kathoden 20 in ihrer Mitte einen entsprechenden Ableiterbereich 40 aufweisen. Der Ableiterbereich 40 der Anoden 10 ist an ihren Umfangsrand ausgebildet, so dass die Kathoden 20 an dieser Stelle eine Aussparung 80 aufweisen. Wie zuvor beschrieben, werden die Ableiterbereiche 40 der gleichnamigen Elektroden miteinander verbunden und Anschlussfahnen 50 werden jeweils in den Ableiterbereichen 40 der Anoden 10 und der Kathoden 20 befestigt.

In Fig. 8 ist ein weiteres Beispiel für Batterieelektroden gemäß der vorliegenden Erfindung gezeigt. In diesem Ausführungsbeispiel sind die Ableiterbereiche 40 vollständig vom Beschichtungsfilm 70 umgeben. Hier weist die Anode 10 zwei Ableiterbereiche 40a und 40b auf und die Kathode 20 zwei entsprechende Aussparungen 80a und 80b. In diesem Fall ist an jedem der beiden Ableiterbereiche 40a und 40b der Anode 10 jeweils eine Anschlussfahne 50 angebracht. Das Ausbilden von mehreren Ableiterbereichen 40 auf einer Elektrode kann zu einer verbesserten Spannungsableitung führen und einen Widerstand reduzieren.

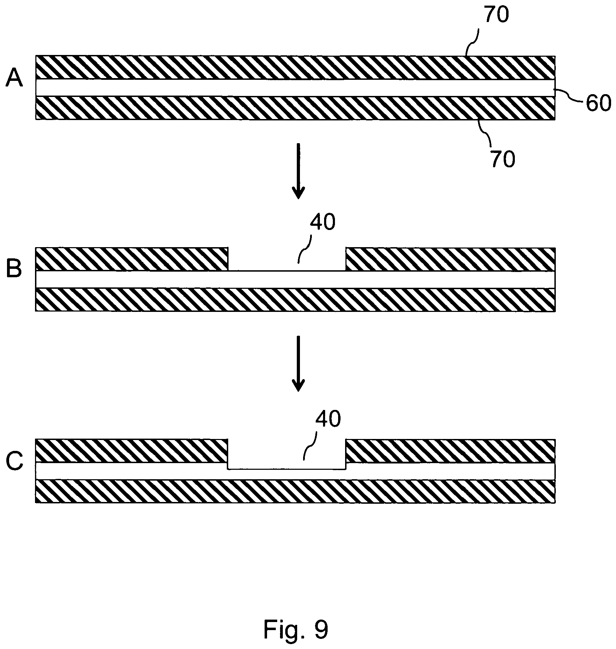

Im Folgenden wird die Herstellung der Batterieelektroden erläutert. Gemäß der vorliegenden Erfindung wird zunächst, wie in Fig. 9A gezeigt, ein Kollektorsubstrat 60 großflächig und beidseitig mit einem Beschichtungsfilm 70 beschichtet. Das Kollektorsubstrat 60 kann allerdings auch nur auf einer Oberfläche großflächig oder im Wesentlichen vollständig beschichtet sein. Der Beschichtungsfilm 70 wird in einem flüssigen Zustand auf das Kollektorsubstrat 60 aufgetragen. Hierbei können einfache, kontinuierliche Beschichtungstechnologien, wie beispielsweise Doctor-blade, Comma-bar oder Kiss-Coating eingesetzt werden. Anschließend wird der Beschichtungsfilm 70 getrocknet oder ausgehärtet, wobei eine Dicke des Beschichtungsfilms 70 im trockenen Zustand beispielsweise in etwa 25µm beträgt. Nach dem Trocknen oder Aushärten des Beschichtungsfilms 70 wird das beschichtete Kollektorsubstrat 60 kalandriert, um den Beschichtungsfilm 70 zu verdichten. Aufgrund der gleichmäßigen Dicke des Kollektorsubstrats 60 ist der Kalandrierprozess vereinfacht und kann effizienter durchgeführt werden, sodass die Qualität des Elektrodenmaterials verbessert ist. Darüber hinaus ist das beschichtete Kollektorsubstrat 60 als Rollenmaterial lagerbar und steht als Elektrodenmaterial für die spätere Weiterverarbeitung zur Verfügung.

Wie in Fig. 9B gezeigt, wird anschließend mindestens ein Ableiterbereich 40 auf dem beschichteten Kollektorsubstrat 60 ausgebildet, indem im Ableiterbereich 40 der Beschichtungsfilm 70 durch Laserablation entfernt und das darunterliegende Kollektorsubstrat 60 freigelegt wird. Bei einer Laserablation wird Material von der Oberfläche durch Beschuss mit Laserstrahlung abgetragen. Hierfür wird beispielsweise gepulste Laserstrahlung mit hoher Leistungsdichte verwendet. Da die Wärmeleitung nur einen sehr langsamen Energietransport in das Volumen ermöglicht, wird die eingestrahlte Energie auf eine sehr dünne Schicht an der Oberfläche konzentriert. Dadurch wird die Oberfläche stark erhitzt und es kommt zum schlagartigen Verdampfen oder Schmelzen des Materials. Um eine ausreichende Absorption des Laserlichts zu gewährleisten, wird eine Wellenlänge der Laserstrahlung in Abhängigkeit des abzutragenden Materials gewählt. Vorzugsweise wird ein Gravur- oder Schneidlasersystem verwendet, beispielsweise mit einem Ytterbiumlaser bei einer Wellenlänge von 1070 nm. Es können allerdings auch andere Gas-, Festkörper- oder Faserlaser eingesetzt werden. Während des Verarbeitungsprozesses kann außerdem ein Prozessgas oder Blasgas auf die Oberfläche geleitet werden, um das abgetragene Material aus der Schnittfuge zu treiben oder unerwünschte chemische Reaktionen an der Oberfläche zu verhindern. Durch das Verdampfen oder Schmelzen des Materials werden keine schädlichen Verunreinigungen erzeugt.

Da die Ableiterbereiche 40 durch Laserablation hergestellt werden, können beliebige Ableiterbereichformen und -anordnungen ausgebildet werden. Insbesondere können die Ableiterbereiche 40 so auf der Elektrodenfläche angeordnet werden, dass sie nicht von der Batterieelektrode vorstehen. Dadurch kann ein Energiedichte/Volumen-Verhältnis erhöht und die Größe einer Batterie bei gleichen elektrischen Eigenschaften verringert werden. Das Ausbilden des Ableiterbereichs 40 erfolgt vorzugsweise unmittelbar vor dem Verbinden von gleichnamigen Elektroden oder dem Anbringen einer Anschlussfahne 50 in den Ableiterbereichen 40. Beispielsweise können übereinanderliegende gleichnamige Elektroden durch einen Schweißkontakt in den Ableiterbereichen 40 miteinander verbunden werden. Hierbei kann gleichzeitig eine Anschlussfahne 50 an einem der Ableiterbereiche 40 befestigt werden. Da die Ableiterbereiche 40 erst kurz vor der Weiterverarbeitung des Elektrodenmaterials ausgebildet werden, steht für die Kontaktierung der gleichnamigen Elektroden untereinander bzw. für das Anbringen der Anschlussfahne 50 eine frische saubere Oberfläche zur Verfügung. Dadurch können Passivierungsschichten wie beispielsweise oxidierte Oberflächen und andere Verunreinigungen im Ableiterbereich 40 vermieden werden.

Möglicherweise wird nicht nur der Beschichtungsfilm 70 im Ableiterbereich 40 mittels Laser entfernt, sondern wie in Fig. 9C gezeigt, auch eine dünne Schicht des Kollektorsubstrats 60. Durch die Verwendung von Lasersystemen mit hoher Schnittpräzision kann die Eindringtiefe des Lasers exakt gesteuert werden, sodass die Tiefe des Materialabtrags beliebig gewählt werden kann. Daher kann ein Kollektorsubstrat 60 im Ableiterbereich 40 gezielt verdünnt werden, um einen elektrischen Kontaktwiderstand zu reduzieren. Außerdem kann dadurch die Oberflächenbeschaffenheit für eine elektrische Kontaktierung verbessert werden.

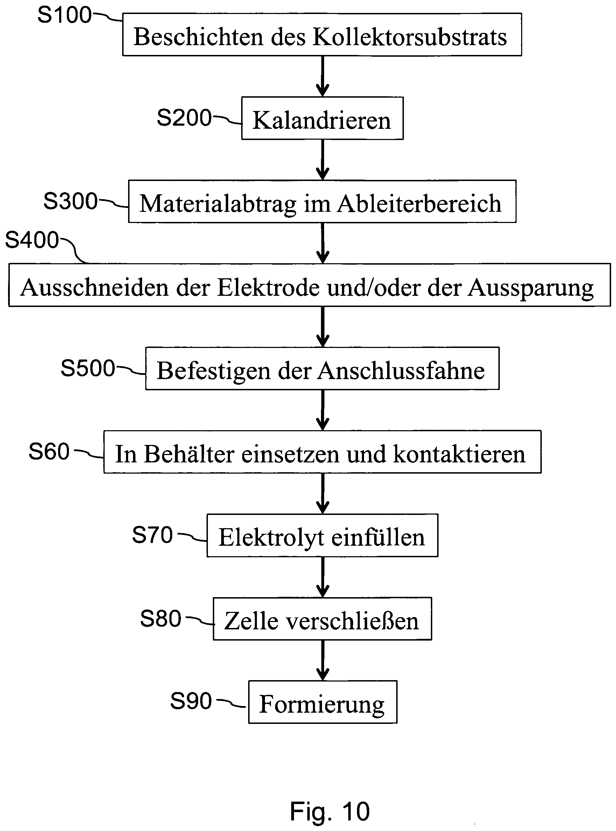

Fig. 10 ist ein Ablaufdiagramm eines Herstellungsprozesses einer Batterie gemäß der vorliegenden Erfindung. Zuerst wird auf einem Kollektorsubstrat 60, das aus einem ungefähr 8-20 µm dicken Metallband besteht, ein tintenartiger Beschichtungsfilm 70 großflächig oder im Wesentlichen vollständig aufgetragen (S100). Nach dem Trocknen oder Aushärten des Beschichtungsfilms 70, der im trockenen Zustand ungefähr 25 µm dick ist, wird das gleichmäßig beschichtete Kollektorsubstrat 60 kalandriert (S200), um beim Trocknen entstandene Hohlräume und Unregelmäßigkeiten aus dem Beschichtungsfilm 70 zu entfernen. Das kalandrierte und beschichtete Kollektorsubstrat 60 kann nun als Rollenmaterial bis zur Weiterverarbeitung gelagert werden. Zur Fertigstellung der Batterieelektrode wird der Beschichtungsfilm 70 in einem vorgegebenen Ableiterbereich 40 auf dem beschichteten Kollektorsubstrat 60 durch Laserablation entfernt (S300). Möglicherweise wird zusätzlich eine dünne Schicht des Kollektorsubstrats 60 im Ableiterbereich 40 abgetragen, um eine Oberflächenqualität für elektrische Kontaktierung zu verbessern. Im nächsten Schritt S400 wird dann die Elektrode und gegebenenfalls die Aussparungen 80 in einer gewünschten Form aus dem beschichteten Kollektorsubstrat 60 ausgeschnitten. Vorzugsweise wird die Elektrode bzw. die Aussparung 80 mit Laser ausgeschnitten, alternativ kann aber auch eine Stanzvorrichtung verwendet werden. Die Reihenfolge der Schritte S400 und S300 kann auch vertauscht werden. Danach werden Anoden 10 und Kathoden 20 abwechselnd übereinander so angeordnet, dass sich jeweils die Ableiterbereiche 40 von gleichnamigen Elektroden gegenüberliegen, wobei zwischen den Ableiterbereichen 40 der Anoden 10 die Aussparungen 80 der Kathoden 20 und umgekehrt angeordnet sind. Anschließend werden jeweils die Ableiterbereiche 40 von gleichnamigen Elektroden beispielsweise durch Ultraschallschweißen miteinander verbunden, wobei jeweils eine Anschlussfahne 50 daran befestigt wird (S500). Altnernativ kann die Anschlussfahne 50 auch vor dem Zusammensetzen der Elektroden jeweils an einer der Kathoden 20 bzw. Anoden 10 angebracht werden.

Die weiteren Schritte entsprechen denen des herkömmlichen Verfahrens zum Herstellen einer Batterie. Die Elektrodenanordnung wird in einen Behälter eingesetzt und die Anschlussfahnen 50 werden mit den äußeren Spannungspolen der Batterie verbunden (S60). Anschließend wird ein Elektrolyt eingefüllt (S70) und die Zelle verschlossen (S80). Abschließend wird eine Formierung (S90) durchgeführt.

Gemäß der vorliegenden Erfindung können Batterieelektroden kostengünstig und mit hoher Qualität hergestellt werden, indem der Ableiterbereich durch Laserablation auf dem beschichteten Kollektorsubstrat hergestellt wird. Aufgrund der hohen Schnittpräzision bezüglich Schnittführung und Eindringtiefe von Lasern können auch komplexe Umrisse präzise und schnell ausgeschnitten oder abgetragen werden. Außerdem wird maximale Designfreiheit möglich, da ein Ableiterbereich mit einem Lasersystem an beliebiger Stelle und in jeder beliebigen an einem Computer entworfenen Form ausgebildet werden kann. Insbesondere können die Ableiterbereiche so ausgebildet werden, dass sie nicht von einem Außenumfang der Batterieelektrode vorstehen, sondern in einen beschichteten Bereich der Batterieelektrode hineinragen. Dadurch kann bei gleicher Batteriegröße eine höhere Kapazität und Energiedichte erreicht werden. Darüber hinaus kann ein platzoptimierter Ableiterbereich ausgebildet werden, sodass lediglich ein unbedingt erforderlicher Bereich durch Laserablation freigelegt wird. Dies erspart weitere Arbeitsschritte zum Entfernen überflüssiger unbeschichteter Elektrodenflächen und überdies Material. Ferner ist die Herstellung von Batterieelektroden schon ab einer geringen Mindeststückzahl rentabel, so dass auch individuell gestaltete Batterien mit geringem Aufwand und niedrigen Kosten hergestellt werden können. Des Weiteren werden eine Flexibilität in der Herstellung und eine Materialausnutzung erhöht. Durch die Verwendung eines Lasers zum Ausbilden der Ableiterbereiche können außerdem einfache kontinuierliche Beschichtungstechnologien zum Herstellen des beschichteten Kollektorsubstrats verwendet werden, sodass ein Herstellungsprozess günstiger wird. Ein vollflächig beschichtetes Kollektorsubstrat ist zudem einfacher zu kalandrieren und besser zu lagern. Da der Ableiterbereich unmittelbar vor einem Kontaktieren hergestellt werden kann, können durch ein erfindungsgemäßes Herstellungsverfahren Verunreinigungen oder Passivierungsschichten im Kontaktbereich vermieden werden und ein Kontaktwiderstand reduziert werden.

## Patentansprüche

1. Verfahren zum Herstellen einer Batterieelektrode, umfassend:
Ausbilden (S100) eines Beschichtungsfilms (70) auf einem Kollektorsubstrat (60) durch großflächiges Auftragen eines tintenartigen Beschichtungsfilms auf dem Kollektorsubstrat (60), Trocknen oder Aushärten des aufgetragenen Beschichtungsfilms;
Kalandrieren des beschichteten Kollektorsubstrats (60);
Herstellen (S200) von mindestens einem Ableiterbereich (40) durch Abtragen des Beschichtungsfilms (70) mittels Laserablation,
**dadurch gekennzeichnet, dass** bei der Herstellung des Ableiterbereichs (40) eine Schicht des Kollektorsubstrats (60) im Ableiterbereich (40) mittels Laserablation durch Steuerung einer Eindringtiefe des Lasers in das Kollektorsubstrat (60) abgetragen wird.

2. Verfahren nach Anspruch 1, wobei der Beschichtungsfilm (70) auf beiden Seiten des Kollektorsubstrats (60) und/oder auf einer gesamten Oberfläche des Kollektorsubstrats (60) und/oder in einem kontinuierlichen Beschichtungsverfahren aufgetragen wird.

3. Verfahren nach Anspruch 1 oder 2, wobei auf mindestens einer Seite des Kollektorsubstrats (60) mindestens ein Ableiterbereich (40) durch Laserablation ausgebildet wird.

4. Verfahren nach einem der obigen Ansprüche, wobei eine Kontaktierung des Kollektorsubstrats (60) im Ableiterbereich (40) mit einer Anschlussfahne (50) unmittelbar nach der Ausbildung des Ableiterbereichs (40) erfolgt (S500).

5. Verfahren nach einem der obigen Ansprüche, wobei das Verfahren zum Herstellen einer Batterieelektrode ferner umfasst:
Ausschneiden der Batterieelektrode und/oder von Aussparungen aus dem beschichteten Kollektorsubstrat mittels Laserschneiden (S400).

6. Verfahren nach einem der obigen Ansprüche, wobei der Ableiterbereich (40) und/oder die Batterieelektrode in einer runden, ringförmigen, rechteckigen, dreieckigen oder beliebigen Form oder als ein Ausschnitt davon hergestellt wird.

7. Verfahren nach einem der obigen Ansprüche, wobei während der Laserablation (S300) und/oder während des Laserschneidens (S400) ein Prozessgas auf das Kollektorsubstrat (60) geblasen wird.

8. Batterieelektrode, umfassend:
ein Kollektorsubstrat (60);
einen kalandrierter Beschichtungsfilm (70) auf dem Kollektorsubstrat (60); und
mindestens einen durch Abtragen des Beschichtungsfilms (70) mittels Laserablation ausgebildeten Ableiterbereich (40), **dadurch gekennzeichnet dass** das Kollektorsubstrat (60) im Ableiterbereich (40) eine geringere Dicke aufweist als im beschichteten Bereich des Kollektorsubstrats (60), wobei die Eindringtiefe des Lasers in das Kollektorsubstrat (60) zum Abtragen einer Schicht des Kollektorsubstrats (60) steuerbar ist.

9. Batterie, die eine Batterieelektrode nach Anspruch 8 enthält.

## Claims

1. A method of manufacturing a battery electrode, comprising:
forming (S100) a coating film (70) on a collector substrate (60) by extensively applying an ink-like coating film on said collector substrate (60), drying or curing the applied coating film;
calendering said coated collector substrate (60);
manufacturing (S200) at least one conductor region (40) by removing said coating film (70) by means of laser ablation,
**characterized in that**, when manufacturing said conductor region (40), one layer of said collector substrate (60) in said conductor region (40) is removed by means of laser ablation by controlling a laser penetration depth into said collector substrate (60).

2. The method according to claim 1, wherein said coating film (70) is applied on both sides of said collector substrate (60), and/or on an entire surface of said collector substrate (60), and/or in a continuous coating method.

3. The method according to claim 1 or 2, wherein, on at least one side of said collector substrate (60), at least one conductor region (40) is formed by means of laser ablation.

4. The method according to one of the previous claims, wherein contacting said collector substrate (60) in said conductor region (40) with a connecting lug (50) is performed immediately after forming said conductor region (40) (S500).

5. The method according to one of the previous claims, the method of manufacturing a battery electrode further comprising:
cutting out the battery electrode and/or recesses from said coated collector substrate by means of laser cutting (S400).

6. The method according to one of the previous claims, wherein said conductor region (40) and/or the battery electrode is manufactured in a circular, annular, rectangular, triangular, or arbitrary shape, or as a cutout therefrom.

7. The method according to one of the previous claims, wherein, during laser ablation (S300) and/or during laser cutting (S400), a process gas is blown onto said collector substrate (60).

8. A battery electrode, comprising:
a collector substrate (60);
a calendered coating film (70) on said collector substrate (60); and
at least one conductor region (40) formed by removing said coating film (70) by means of laser ablation, **characterized in that** said collector substrate (60) has a lower thickness in said conductor region (40) than in the coated region of said collector substrate (60), wherein the laser penetration depth into said collector substrate (60) is controllable to remove a layer of said collector substrate (60).

9. A battery comprising a battery electrode according to claim 8.

## Revendications

1. Procédé pour la fabrication d'une électrode de batterie, comprenant :
la formation (S100) d'un film de revêtement (70) sur un substrat collecteur (60) par application d'un film de revêtement du genre encre sur une grande surface du substrat collecteur (60), séchage ou durcissement du film de revêtement appliqué ;
le calandrage du substrat collecteur (60) revêtu ;
la fabrication (S200) d'au moins une région de dissipation (40) par enlèvement du film de revêtement (70) à l'aide d'une ablation au laser,
**caractérisé en ce que** lors de la fabrication de la région de dissipation (40), une couche du substrat collecteur (60) dans la région de dissipation (40) est enlevée par ablation au laser en commandant une profondeur d'introduction du laser dans le substrat collecteur (60).

2. Procédé selon la revendication 1, dans lequel le film de revêtement (70) est appliqué sur les deux côtés du substrat collecteur (60) et/ou sur la totalité d'une surface supérieure du substrat collecteur (60) et/ou au cours d'un procédé de revêtement continu.

3. Procédé selon la revendication 1 ou 2, dans lequel au moins une région de dissipation (40) est formée par ablation au laser sur au moins un côté du substrat collecteur (60).

4. Procédé selon l'une des revendications précédentes, dans lequel le substrat collecteur (60) est mis en contact (S500) avec une languette de connexion (50) dans la région de dissipation (40) directement après la formation de la région de dissipation (40).

5. Procédé selon l'une des revendications précédentes, dans lequel le procédé pour la fabrication d'une électrode de batterie comprend en outre :
le découpage de l'électrode de batterie et/ou d'évidements dans le substrat collecteur revêtu par découpage au laser (S400).

6. Procédé selon l'une des revendications précédentes, dans lequel la région de dissipation (40) et/ou l'électrode de batterie est/sont réalisée(s) dans une forme ronde, annulaire, rectangulaire, triangulaire ou une forme au choix ou comme une découpure de celle-ci.

7. Procédé selon l'une des revendications précédentes, dans lequel un gaz de traitement est soufflé sur le substrat collecteur (60) pendant l'ablation au laser (S300) et/ou pendant le découpage au laser (S400).

8. Électrode de batterie comprenant :
un substrat collecteur (60) ;
un film de revêtement (70) calandré sur le substrat collecteur (60) ; et
au moins une région de dissipation (40) formée par enlèvement du film de revêtement (70) à l'aide d'une ablation au laser, **caractérisée en ce que** dans la région de dissipation (40), le substrat collecteur (60) présente une épaisseur plus petite que dans la région revêtue du substrat collecteur (60), la profondeur d'introduction du laser dans le substrat collecteur (60) pour l'enlèvement d'une couche du substrat collecteur (60) pouvant être commandée.

9. Batterie comportant une électrode de batterie selon la revendication 8.
